# EUROPEAN PATENT SPECIFICATION

(11) **EP 3 050 434 B1**
(45) Date of publication and mention of the grant of the patent: **19.06.2019**
(21) Application number: 14849415.6
(22) Date of filing: 26.09.2014
(51) Int. Cl.: A01N 3/00

(54) **METHOD FOR PRESERVING NATURAL GRASS WHICH HAS BEEN DUG UP**
VERFAHREN ZUR KONSERVIERUNG VON AUSGEGRABENEM NATÜRLICHEN GRAS
PROCÉDÉ DE CONSERVATION DE GAZON NATUREL QUI A ÉTÉ DÉTERRÉ

(30) Priority: 27.09.2013 ES 201331416
(43) Date of publication of application: 03.08.2016
(73) Proprietor: Verdissimo Forever Young, S.A., 46900 Torrent (Valencia) (ES)
(72) Inventor: GROS ESPAÑA, Sergio, E-08339 Vilassar de Dalt (Barcelona) (ES)
(74) Representative: Durán-Corretjer, S.L.P.
(86) International application number: PCT/ES2014/070738
(87) International publication number: WO 2015/044500

(56) References cited:
- EP-A2- 0 018 341
- WO-A1-2009/037514
- DD-A1- 279 164
- FR-A1- 2 160 310
- FR-A1- 2 642 272
- FR-A1- 2 642 272
- GB-A- 190 012 835
- GB-A- 191 308 263
- US-A- 3 895 140
- US-A- 4 328 256
- DATABASE WPI Week 200539 Thomson Scientific, London, GB; AN 2005-376694 XP002769339, & JP 2005 126377 A (ENOME K) 19 May 2005 (2005-05-19)
- .: "Fußball-WM-Rasen 2006 aus Olympia-Stadion Berlin -mit Zertifikat", , 1 January 2017 (2017-01-01), page 1, XP055365471, Germany Retrieved from the Internet: URL:https://de.allyouneed.com/de/fussball- wm-rasen-2006-aus-olympia-stadion-berlin-- mit-zertifikat/p132751184/ [retrieved on 2017-04-19]
- Eryn Phillips: "UA fans can own turf from title game", , 16 January 2010 (2010-01-16), pages 1-2, XP055365470, U.S.A. Retrieved from the Internet: URL:http://www.tuscaloosanews.com/news/201 00116/ua-fans-can-own-turf-from-title-game [retrieved on 2017-04-19]
- Rich Mueller: "BCS Turf Cut Up, Freeze Dried, Ready for Sale", , 28 January 2011 (2011-01-28), pages 1-1, XP055365469, U.S.A. Retrieved from the Internet: URL:http://www.sportscollectorsdaily.com/b cs-turf-cut-up-freeze-dried-ready-for-sale / [retrieved on 2017-04-19]
- Alan Stevens: "MF-2446: PRESERVING FLOWERS AND DECORATIVE FOLIAGES WITH GLYCERIN AND DYE", , 1 April 2000 (2000-04-01), pages 1-4, XP055434506, U.S.A. Retrieved from the Internet: URL:https://www.bookstore.ksre.ksu.edu/pub s/mf2446.pdf [retrieved on 2017-12-12]

## Description

The present invention relates to a method for preserving natural turf that allows said turf to retain its natural or living appearance for a long period of time once it has been pulled up. Using the method of the present invention, said turf can for example be kept as a commemorative souvenir, a collector's item or a decorative item, since the turf may come from the stadium of a specific club, a particular competition or another place of interest, and may even have been authenticated beforehand in terms of its certificate of origin or source. In addition, it is contemplated that the turf preserved according to the present invention is used for decorative purposes as a natural, long-lasting decorative element in, for example, flower arrangements, display cabinets, window displays, vertical gardens and indoor gardens, for example in offices, hotels, homes and shopping areas.

Normally, the turf is replaced fairly regularly. The time for which said turf lasts depends mainly on the age thereof and how heavily it has been used, as well as, inter alia, on how well the turf was cared for and maintained, how much it was cut and fertilised, and the aeration thereof. Once the decision is made to replace the turf, the turf to be replaced is pulled up and generally thrown away in order to sow new grass or lay new turf.

Normally, the turf to be replaced is pulled up using specially designed machines that make it possible to pull up said turf, together with the roots and earth, in the form of sheets or strips, approximately 2 cm to 5 cm thick, commonly known as sods, formed of a 1 to 2 cm layer of earth and the turf itself of 1 to 3 cm, which can be rolled up or stacked to be transported.

On the other hand, it is known that fans, collectors or anyone else who wishes to have a souvenir of a favourite team or club may want to have a small portion of the turf or a piece of the sod from their favourite team's stadium as a souvenir. However, it is difficult to preserve the appearance with regard to texture, colour and shape of said turf for a long period of time once it is pulled up.

The present inventor has surprisingly developed a new method for preserving natural, pulled-up turf that allows said natural turf to retain its natural or living appearance for a long period of time.

Various methods and compositions are known in the prior art for retaining the natural appearance, i.e. colour, shape, texture, etc., of different parts of the plants once they have been cut or pulled up from the element in which they are kept alive. For example, the Japanese patent application JPS5944301 discloses a composition for preserving plants and flowers that comprises an adhesive, such as vinyl acetate, and an anti-discolouring agent, such as alum.

In the article of Eryn Phillips: "UA fans can own turf from title game", 16 January 2010, pag. 1-2, XP055365470, U.S.A., Retrieved from the Internet: URL:http://www.tuscaloosanews.com/news/20100116/ua-fans-own-turf-from-title-game is disclosed a method for preserving natural turf from an American football field that has been pulled up, characterised in that said method comprises the steps of pulling up the sods, laying the sods on a surface, and freeze-drying the sods.

On the other hand, in the article of Rich Mueller: "BCS Turf Cut Up, Freeze Dried, Ready for Sale", 28 January 2011, pag. 1-1, XP055365469, U.S.A., Retrieved from the Internet: URL:http://www.sportscollectorsdaily.com/bcs-turf-cut-up-freeze-dried-ready-for-sale/ is disclosed a method for preserving natural turf from an American football field that has been pulled up, characterised in that said method comprises the steps of pulling up the sods, laying the sods on a surface, and freeze-drying the sods.

Document DD 279 164 A1 discloses a method for preserving harvested parts of plants, in particular grasses, by spraying said plant parts with a composition comprising glycerine and drying them for 14 days in the air.

Document FR 2 642 272 A1 discloses a method for preserving living plants involving the step of cutting plants and immersing the cutting plants in a preservation composition comprising glycerine, followed by drying the soaked plants parts.

The novel method of the present invention, which is specific to preserving natural turf that has been pulled up, is based on applying a composition which, unlike the aforementioned prior art, comprises glycerine and, optionally, phosphorus, one or more dyes, one or more colour stabilisers and/or one or more antioxidants.

Using the method of the present invention, the natural turf that has been pulled up retains its appearance, texture, colour and shape over a long period of time.

The method of the present invention for preserving natural turf that has been pulled up comprises the following steps:
a) pulling up the sods of natural turf;
b) laying out the sods on a planar surface;
c) applying a preservation composition comprising from 10 to 50 wt.% glycerine; and
d) drying the sods obtained in step c).

In a preferred embodiment, the planar surface used in step b) for laying out the sods is made of asphalt or concrete. Additionally, if the planar surface used in step b) for laying out the sods is an absorbent material such as wood (for example, absorbent wood) or foam, it has been shown that moisture is minimised and the drying process mentioned in step d) is improved.

As mentioned above, for the effects of the present invention, the sods pulled up can have a thickness of between 2 cm and 10 cm, preferably of 3 cm. Persons skilled in the art are familiar with the types of machine that are available on the market for pulling up sods having the aforementioned thicknesses.

In a preferred embodiment, in the method of the present invention the preservation composition used in step c) comprises from 25 wt.% to 35 wt.% glycerine.

It is contemplated that the preservation composition in step c) additionally comprises phosphorus, which can make up from 1 wt.% to 99 wt.% of said preservation composition.

The composition in step c) of the method of the present invention can further comprise one or more pigments or dyes that can have a green hue desired for the turf to be preserved, or that can have hues or colours which, when combined, give the green hue desired for the turf to be preserved (for example, yellow and blue), although other pigments or dyes of different colours can also be used. Said pigments or dyes are known by persons skilled in the art, who will readily select and combine them to obtain or retain the desired colour. In a preferred embodiment, the preservation composition used in step c) of the method of the present invention comprises from 0.01 wt.% to 5 wt.% of the pigment or dye or combinations of pigments or dyes, more preferably from 0.1 wt.% to 1 wt.%.

It is also contemplated that the preservation composition used in step c) of the method of the present invention additionally comprises one or more colour stabilisers. Said colour stabilisers are known by persons skilled in the art, who will select the most suitable one or the most suitable combination according to the circumstances. In a preferred embodiment, said one or more colour stabilisers make up from 0.01 wt.% to 1 wt.% of said composition.

In addition, the preservation composition used in step c) of the method of the present invention can also comprise one or more antioxidants. Said antioxidants are known by persons skilled in the art, who will select the most suitable one or the most suitable combination according to the circumstances. In a preferred embodiment, said one or more antioxidants make up from 0.01 wt.% to 1 wt.% of said composition.

In the most preferred embodiment, the preservation composition of step c) of the method of the present invention comprises, in addition to glycerine (and optionally phosphorus), a combination of blue and yellow pigments, one or more colour stabilisers (preferably one) and one or more antioxidants (preferably one).

Furthermore, the preservation composition used in step c) of the method of the present invention can comprise other reagents such as the one marketed under the code D-100 (Invitrogen, USA).

Once the desired percentages for the preservation composition have been selected, the remaining percentage is met or completed with any suitable liquid for preservation compositions that is available in the prior art, more preferably with water.

The preservation composition in step c) can be applied by contact. In a preferred embodiment, this is carried out by irrigation, spraying, sprinkling or any other method that allows the contact and absorption of the preservation composition, via either the leaves or the roots. In the most preferred embodiment, the composition is applied by spraying in step c) of the method of the present invention. Said preservation composition can be applied just once or multiple times, depending for example on the final colour desired for the turf to be preserved.

The drying step, step d), of the method of the present invention for preserving natural turf is very important. Said step d) can be carried out outside or in moisture-controlled chambers to achieve more controlled drying. Step d) lasts between 1 week and 5 weeks, preferably 3 weeks, for example, when moisture-controlled chambers are used.

The preserved turf obtained by means of the method of the present invention can be sold in many different ways and formats, for example in a transparent vase made of glass, plastics or any other material, inside a package, framed in a table or wall stand, or in any container that is suitable for arranging the preserved turf, re-laid as artificial turf. As mentioned above, it is also contemplated that the turf preserved according to the present invention is used for decorative purposes as a natural, long-lasting decorative element in, for example, flower arrangements, display cabinets, window displays, vertical gardens and indoor gardens, for example in offices, hotels, homes and shopping areas.

Hereinafter, the present invention will be described in more detail with reference to illustrative examples, which do not limit the present invention.

### EXAMPLES

### Example 1

Sods of natural turf were pulled up from a stadium of one of the biggest football teams in Barcelona. Said sods were laid out on an asphalt surface and a preservation composition containing 98.2 wt.% glycerine, 1.5 wt.% phosphorus and 0.3 wt.% of a green dye was applied thereto by sprinkling.

The composition was applied three times over two days. Following the final application of the preservation composition, the sods were left to dry outside (ambient temperature) for 17 days.

The preserved turf retained its living appearance and its original texture and shape for at least one year.

### Example 2

Sods of natural turf were pulled up from a stadium of one of the biggest football teams of Bilbao. Said sods were laid out on a concrete surface and a composition containing 24.3 wt.% glycerine, 75.1 wt.% phosphorus and 0.6 wt.% of a green dye was applied thereto by spraying.

The preservation composition was applied once, and then the sods were dried in moisture-controlled chambers at ambient temperature for 20 days.

The preserved turf retained its living appearance and its original texture and shape for at least a year and a half.

### Example 3

Sods of natural turf were pulled up from a stadium of one of the biggest football teams in Barcelona. Said sods were laid out on an absorbent material (such as absorbent wood or foam) and a preservation composition containing 35 wt.% glycerine, 1 wt.% of a mixture of blue and yellow dyes, a colour stabiliser and an antioxidant was applied thereto by spraying. The rest of the volume was made up with water.

The composition was applied three times over two weeks. Then, the sods were dried in moisture-controlled chambers at ambient temperature for 20 days.

The preserved turf retained its living appearance and its original texture and shape for at least one year.

## Claims

1. Method for preserving natural turf that has been pulled up, **characterised in that** said method comprises the following steps:
a) pulling up the sods of natural turf;
b) laying out the sods on a planar surface;
c) applying a preservation composition comprising from 10 wt.% to 50 wt.% glycerine; and
d) drying the sods obtained in step c).

2. Method for preserving natural turf that has been pulled up, according to claim 1, **characterised in that** the thickness of the sods pulled up in step a) is from 2 cm to 10 cm.

3. Method for preserving natural turf that has been pulled up, according to claim 1, **characterised in that** the thickness of the sods pulled up in step a) is 3 cm.

4. Method for preserving natural turf that has been pulled up, according to any one of the preceding claims, **characterised in that** the preservation composition of step c) further comprises one or more pigments or dyes.

5. Method for preserving natural turf that has been pulled up, according to claim 4, **characterised in that** said preservation composition comprises from 0.01 wt.% to 5 wt.% of the pigments or dyes.

6. Method for preserving natural turf that has been pulled up, according to any one of the preceding claims, **characterised in that** the preservation composition of step c) further comprises one or more colour stabilisers.

7. Method for preserving natural turf that has been pulled up, according to any one of the preceding claims, **characterised in that** the preservation composition of step c) further comprises one or more antioxidants.

8. Method for preserving natural turf that has been pulled up, according to any one of the preceding claims, **characterised in that** said preservation composition is applied in step c) by contact.

9. Method for preserving natural turf that has been pulled up, according to claim 8, **characterised in that** said preservation composition is applied by contact in step c) by means of irrigation, spraying or sprinkling.

10. Method for preserving natural turf that has been pulled up, according to any one of the preceding claims, **characterised in that** the drying step, step d), is carried out outside.

11. Method for preserving natural turf that has been pulled up, according to any one of the claims 1 to 9, **characterised in that** the drying step, step d), is carried out in moisture-controlled chambers.

12. Method for preserving natural turf that has been pulled up, according to any one of the preceding claims, **characterised in that** the drying step, step d), lasts for between one and five weeks.

13. Method for preserving natural turf that has been pulled up, according to claim 12, **characterised in that** the drying step, step d), lasts for three weeks.

## Patentansprüche

1. Verfahren zum Konservieren von ausgerissenem Naturrasen, **dadurch gekennzeichnet, dass** das Verfahren die folgenden Schritte umfasst:
a) Ausreißen der Soden von Naturrasen;
b) Auslegen der Soden auf einer ebenen Oberfläche;
c) Aufbringen einer Konservierungszusammensetzung, die 10 Gew.-% bis 50 Gew.-% Glycerin umfasst; und
d) Trocknen der in Schritt c) erhaltenen Soden.

2. Verfahren zum Konservieren von ausgerissenem Naturrasen nach Anspruch 1, **dadurch gekennzeichnet, dass** die Dicke der in Schritt a) ausgerissenen Soden von 2 cm bis 10 cm beträgt.

3. Verfahren zum Konservieren von ausgerissenem Naturrasen nach Anspruch 1, **dadurch gekennzeichnet, dass** die Dicke der in Schritt a) ausgerissenen Soden 3 cm beträgt.

4. Verfahren zum Konservieren von ausgerissenem Naturrasen nach einem der vorhergehenden Ansprüche, **dadurch gekennzeichnet, dass** die Konservierungszusammensetzung von Schritt c) ferner eines oder mehrere Pigmente oder Farbstoffe umfasst.

5. Verfahren zum Konservieren von ausgerissenem Naturrasen nach Anspruch 4, **dadurch gekennzeichnet, dass** die Konservierungszusammensetzung 0,01 Gew.-% bis 5 Gew.-% der Pigmente oder Farbstoffe umfasst.

6. Verfahren zum Konservieren von ausgerissenem Naturrasen nach einem der vorstehenden Ansprüche, **dadurch gekennzeichnet, dass** die Konservierungszusammensetzung von Schritt c) ferner einen oder mehrere Farbstabilisatoren umfasst.

7. Verfahren zum Konservieren von ausgerissenem Naturrasen nach einem der vorhergehenden Ansprüche, **dadurch gekennzeichnet, dass** die Konservierungszusammensetzung von Schritt c) ferner eines oder mehrere Antioxidantien umfasst.

8. Verfahren zum Konservieren von ausgerissenem Naturrasen nach einem der vorhergehenden Ansprüche, **dadurch gekennzeichnet, dass** die Konservierungszusammensetzung in Schritt c) durch Kontakt aufgebracht wird.

9. Verfahren zum Konservieren von ausgerissenem Naturrasen nach Anspruch 8, **dadurch gekennzeichnet, dass** die Konservierungszusammensetzung in Schritt c) durch Kontakt mittels Bewässerung, Sprühen oder Berieselung aufgebracht wird.

10. Verfahren zum Konservieren von ausgerissenem Naturrasen nach einem der vorstehenden Ansprüche, **dadurch gekennzeichnet, dass** der Trocknungsschritt, Schritt d), daußen durchgeführt wird.

11. Verfahren zum Konservieren von ausgerissenem Naturrasen nach einem der Ansprüche 1 bis 9, **dadurch gekennzeichnet, dass** der Trocknungsschritt, Schritt d), in feuchtigkeitsgeregelten Kammern durchgeführt wird.

12. Verfahren zum Konservieren von ausgerissenem Naturrasen nach einem der vorhergehenden Ansprüche, **dadurch gekennzeichnet, dass** der Trocknungsschritt, Schritt d), zwischen einer und fünf Wochen dauert.

13. Verfahren zum Konservieren von ausgerissenem Naturrasen nach Anspruch 12, **dadurch gekennzeichnet, dass** der Trocknungsschritt, Schritt d), drei Wochen dauert.

## Revendications

1. Procédé de conservation d'un gazon naturel qui a été arraché, **caractérisé en ce que** ledit procédé comprend les étapes suivantes :
a) arracher les mottes de gazon naturel ;
b) disposer les mottes de gazon sur une surface plane ;
c) appliquer une composition de conservation comprenant de 10 % en poids à 50 % en poids de glycérine ; et
d) sécher les mottes de gazon obtenues à l'étape c).

2. Procédé de conservation d'un gazon naturel qui a été arraché, selon la revendication 1, **caractérisé en ce que** l'épaisseur des mottes de gazon arrachées au cours de l'étape a) est de 2 cm à 10 cm.

3. Procédé de conservation d'un gazon naturel qui a été arraché, selon la revendication 1, **caractérisé en ce que** l'épaisseur des mottes de gazon arrachées au cours de l'étape a) est de 3 cm.

4. Procédé de conservation d'un gazon naturel qui a été arraché, selon l'une quelconque des revendications précédentes, **caractérisé en ce que** la composition de conservation de l'étape c) comprend en outre un ou plusieurs pigments ou colorants.

5. Procédé de conservation d'un gazon naturel qui a été arraché, selon la revendication 4, **caractérisé en ce que** ladite composition de conservation comprend de 0,01 % en poids à 5 % en poids des pigments ou colorants.

6. Procédé de conservation d'un gazon naturel qui a été arraché, selon l'une quelconque des revendications précédentes, **caractérisé en ce que** la composition de conservation de l'étape c) comprend en outre un ou plusieurs stabilisateurs de couleur.

7. Procédé de conservation d'un gazon naturel qui a été arraché, selon l'une quelconque des revendications précédentes, **caractérisé en ce que** la composition de conservation de l'étape c) comprend en outre un ou plusieurs antioxydants.

8. Procédé de conservation d'un gazon naturel qui a été arraché, selon l'une quelconque des revendications précédentes, **caractérisé en ce que** ladite composition de conservation est appliquée au cours de l'étape c) par contact.

9. Procédé de conservation d'un gazon naturel qui a été arraché, selon la revendication 8, **caractérisé en ce que** la composition de conservation est appliquée par contact au cours de l'étape c) au moyen d'une irrigation, d'une pulvérisation ou d'une aspersion.

10. Procédé de conservation d'un gazon naturel qui a été arraché, selon l'une quelconque des revendications précédentes, **caractérisé en ce que** l'étape de séchage, étape d), est réalisée à l'extérieur.

11. Procédé de conservation d'un gazon naturel qui a été arraché, selon l'une quelconque des revendications 1 à 9, **caractérisé en ce que** l'étape de séchage, étape d), est réalisée dans des chambres à humidité contrôlée.

12. Procédé de conservation d'un gazon naturel qui a été arraché, selon l'une quelconque des revendications précédentes, **caractérisé en ce que** l'étape de séchage, étape d), dure entre une et cinq semaines.

13. Procédé de conservation d'un gazon naturel qui a été arraché, selon la revendication 12, **caractérisé en ce que** l'étape de séchage, étape d), dure trois semaines.
